# EUROPÄISCHE PATENTANMELDUNG

(11) **EP 4 505 869 A1**
(43) Veröffentlichungstag der Anmeldung: **12.02.2025**
(21) Anmeldenummer: 24189385.8
(22) Anmeldetag: 18.07.2024
(51) Int. Cl.: A01K 1/00, A01K 31/20, A01K 31/18, A01K 31/22

(54) **GEFLÜGELTIERSTALL, INSBESONDERE PUTENSTALL, ZUR HALTUNG VON GEFLÜGELTIEREN SOWIE BETREFFENDES HALTUNGSVERFAHREN UND VERWENDUNG**

(30) Priorität: 09.08.2023 LU 504885
(71) Anmelder: Big Dutchman International GmbH, 49377 Vechta (DE)
(72) Erfinder: SÜDKAMP, Heinz, 49413 Dinklage (DE); BEUSE, Uwe, 49377 Vechta (DE)
(74) Vertreter: Eisenführ Speiser

(57) **Zusammenfassung**

Die Erfindung betrifft einen Geflügeltierstall (100), insbesondere einen Putenstall (100), zur Haltung von Geflügeltieren, mit einem Stall-Innenraum (2), welcher einen Tier-Aufenthaltsbereich (4) aufweist, wobei der Stall-Innenraum (2) an wenigstens einer Seite (6a, 6b) mittels wenigstens einer Öffnung (8a, 8b) zur Umgebung (10) des Geflügeltierstalls (100) hin offen ausgebildet ist.

Erfindungsgemäß wird vorgeschlagen, dass der Geflügeltierstall (100) wenigstens eine Filtereinrichtung (12) aufweist, welche dazu eingerichtet ist, Frischluft (14) anzusaugen, zu filtern und als gefilterte Luft (16) an den Stall-Innenraum (2) abzugeben und eine Verschlusseinrichtung (18), welche dazu eingerichtet ist, die wenigstens eine Öffnung (8a, 8b), insbesondere während des Betriebs der Filtereinrichtung (12), zu verschließen.

## Beschreibung

Die Erfindung betrifft einen Geflügeltierstall, insbesondere einen Putenstall, zur Haltung von Geflügeltieren mit einem Stall-Innenraum, welcher einen Tier-Aufenthaltsbereich aufweist, wobei der Stall-Innenraum an wenigstens einer Seite mittels wenigstens einer Öffnung zur Umgebung des Geflügeltierstalls hin offen ausgebildet ist.

Derartige Geflügeltierställe, insbesondere Putenställe, sind aus dem Stand der Technik bekannt. Sie werden häufig als sogenannte Offenställe ausgebildet, wobei der Stall-Innenraum an wenigstens einer Längsseite, insbesondere an zwei gegenüberliegenden Längsseiten, im Wesentlichen offen ausgebildet ist. Wenngleich sich dieses Stallkonzept grundlegend bewährt hat und eine gute Durchlüftung des Stall-Innenraums sicherstellt, hat sich gezeigt, dass derartige Putenstallformen aufgrund ihrer offenen Bauweise durchaus anfällig sind für Übertragungen von Krankheiten von Wildtieren auf in einem solchen Stall gehaltenen Geflügeltiere, insbesondere Puten. Beispielsweise hat sich gezeigt, dass die in einem solchen offenen Putenstall gehaltenen Puten während der Monate des Vogelzugs im Herbst anfällig sind für Infektionen mit sogenannter Aviärer Influenza (AI), auch als Geflügelpest bezeichnet.

Aus dem Stand der Technik sind für geschlossene Geflügeltierställe zur Vermeidung derartiger Infektionen Filtereinrichtungen bekannt, welche dazu eingerichtet sind, Frischluft anzusaugen, zu filtern und die gefilterte Luft an den Stall-Innenraum abzugeben. Für Putenställe offener Bauweise kann diese Lösung jedoch derzeit nicht zufriedenstellend eingesetzt werden.

Vor diesem Hintergrund lag der Erfindung die Aufgabe zugrunde, einen Geflügeltierstall der eingangs bezeichneten Art dahingehend weiterzubilden, dass die im Stand der Technik aufgefunden Nachteile möglichst weitgehend behoben werden. Insbesondere war ein Geflügeltierstall offener Bauweise anzugeben, für den das Infektionsrisiko der in dem Stall gehaltenen Geflügeltiere durch von außen eingebrachte Krankheitserreger reduziert wird.

Erfindungsgemäß wird die Aufgabe bei einem Geflügeltierstall der eingangs genannten Art durch wenigstens eine Filtriereinrichtung gelöst, welche dazu eingerichtet ist, Frischluft anzusaugen, zu filtern und als gefilterte Luft an den Stall-Innenraum abzugeben, und eine Verschlusseinrichtung, welche dazu eingerichtet ist, die wenigstens eine Öffnung des Stall-Innenraums zur Umgebung, insbesondere während des Betriebs der Filtereinrichtung, zu verschließen.

Die Erfindung macht sich die Erkenntnis zunutze, dass eine Filtriereinrichtung auch für Putenställe offener Bauweise dann genutzt werden kann, wenn gleichzeitig eine Verschlusseinrichtung vorgehalten wird, welche dazu eingerichtet ist, die Öffnungen des Geflügeltierstalls zwischen dem Stall-Innenraum und der Umgebung des Geflügeltierstalls zu verschließen. Auf diese Weise kann von den Vorteilen eines Putenstalls offener Bauweise in Bezug auf die Belüftung auch weiterhin profitiert werden und die Öffnung oder die Öffnungen des Geflügeltierstalls mittels der Verschlusseinrichtung insbesondere dann verschlossen werden, wenn aufgrund des Vogelzugs ein besonderes Ansteckungsrisiko für die Geflügeltiere gegeben ist. Liegt kein solches Infektionsrisiko vor, kann auch auf den Betrieb der Filtriereinrichtung verzichtet werden und auf herkömmliche Ventilationsmittel, falls erforderlich, zurückgegriffen werden.

Gemäß einer Ausführungsform weist die Verschlusseinrichtung wenigstens eine Gardine auf, welche dazu eingerichtet ist, die wenigstens eine Öffnung zu verschließen oder freizugeben. Eine solche Gardine hat sich als besonders geeignet erwiesen, insbesondere sämtliche Öffnungen des Stall-Innenraums zur Umgebung des Geflügeltierstalls auf einfache Weise, nämlich durch Herunterfahren einer solchen Gardine, temporär zu verschließen, insbesondere für Perioden, die mit einem erhöhten Infektionsrisiko einhergehen. Die Verwendung einer Gardine ist kostengünstig und derartige Systeme sind für bestehende Geflügeltierställe nachrüstbar. Darüber hinaus lässt sich eine solche Gardine bei Nicht-Benutzung platzsparend zusammenrollen, wobei das Öffnen und Schließen auf einfache Weise automatisiert werden kann. Vorzugsweise ist jeweils eine Gardine je Längsseite des Stall-Innenraums vorgesehen. Gemäß einer Ausführungsform erstreckt sich die Gardine über die gesamte mit Öffnungen versehene Längsseite des Geflügeltierstalls. Die Gardine ist insbesondere derart ausgebildet, dass sämtliche der Öffnungen durch die Gardine bzw. die Gardinen verschlossen werden.

Gemäß einer Ausführungsform weist die Filtereinrichtung ein Gebläse und einen Filter auf, insbesondere einen mechanischen Filter, welcher dazu eingerichtet ist, Partikel aus der angesaugten Frischluft zu filtern. Hierzu weist der mechanische Filter vorzugsweise geeignet ausgebildete Trägerpartikel auf. Viren haften sich an die entsprechenden Trägerpartikel an und werden hierdurch in ausreichendem Maße aus der angesaugten Frischluft gefiltert. Auf diese Weise wird sichergestellt, dass die in den Stall-Innenraum abgegebene gefilterte Luft derart von Viren gereinigt ist, dass das Infektionsrisiko für die im Stall-Innenraum aufgenommenen Geflügeltiere weitestgehend reduziert wird.

Gemäß einer Ausführungsform weist die Filtereinrichtung eine Kühleinheit, insbesondere eine adiabatische Kühleinheit, auf, wobei die Kühleinheit dazu eingerichtet ist, eine Temperatur der gefilterten Luft zu konditionieren. Mittels der Kühleinheit kann die dem Stall-Innenraum zugeführte Luft entsprechend konditioniert, d. h. auf eine gewünschte Temperatur gekühlt oder erwärmt werden. Auf diese Weise kann das Tierwohl der in dem Geflügeltierstall gehaltenen Geflügeltiere gesteigert werden.

Gemäß einer Ausführungsform ist zwischen der Filtereinrichtung und dem Stall-Innenraum ein Rohrsystem zur Zuführung der gefilterten Luft zu dem Stall-Innenraum vorgesehen. Auf diese Weise kann die gefilterte Luft zielgerichtet dem Stall-Innenraum zugeführt werden. Gemäß einer Ausführungsform ist zwischen dem Rohrsystem und dem Stall-Innenraum eine Düsenanordnung angeordnet, die dazu eingerichtet ist, die gefilterte Luft gerichtet in den Stall-Innenraum abzugeben, wobei die Abgaberichtung vorzugsweise einstellbar ausgebildet ist. Auf diese Weise kann die Zuführung der gefilterten Luft zu dem Stall-Innenraum und die Luftdurchmischung in dem Stall-Innenraum optimiert werden.

Gemäß einer Ausführungsform ist der Stall-Innenraum an wenigstens zwei Seiten jeweils mittels einer Öffnung zur Umgebung des Geflügeltierstalls hin offen ausgebildet, insbesondere an gegenüberliegenden Längsseiten des Stall-Innenraums und wobei jeder Seite jeweils eine Verschlusseinrichtung, insbesondere eine Gardine, zum Verschließen der Öffnungen zugeordnet ist.

Gemäß einer Ausführungsform ist der Geflügeltierstall als Offenstall ausgebildet. Eine derartige Konfiguration von Putenställen hat sich als besonders geeignet erwiesen, wobei jedoch für derartige Stalltypen die beschriebene Anfälligkeit für Virusinfektionen durch Wildtiere besteht.

Gemäß einer Ausführungsform ist die Filtereinrichtung dazu eingerichtet, bei geschlossener Gardine oder bei geschlossenen Gardinen einen aktuellen Druck in dem Stall-Innenraum zu erzeugen, welcher vorzugsweise einen Umgebungsdruck in einer Umgebung des Geflügeltierstalls übersteigt. Hierdurch kann auch dann, wenn die Abdichtung der Öffnungen durch die Gardinen nicht vollständig dicht ist, sichergestellt werden, dass aufgrund der permanent aus dem Stall-Innenraum in Richtung der Umgebung ausströmenden gefilterten Luft, keine ungefilterte und potenziell virenbelastete Luft aus der Stallumgebung in Richtung des Stall-Innenraums eindringen kann. So haben eventuelle Undichtigkeiten, die sowohl baulich als auch systembedingt vorhanden sein können, keinen signifikanten Einfluss auf die Virenbelastung des Stall-Innenraums.

Gemäß einer Ausführungsform ist die Gardine aus einem im Wesentlichen gasdichten Material ausgebildet, wobei die Gardine den Stall-Innenraum gegenüber der Umgebung des Geflügeltierstalls abschirmt bzw. weitestgehend abschirmt. Geringe Undichtigkeiten sind, wie beschrieben, aufgrund des vorzugsweise im Bereich des Stall-Innenraums vorhandenen Überdruckes unproblematisch, da aufgrund des Überdruckes das Eindringen von Krankheitserregern auch bei nicht vollständiger Abdichtung verhindert wird.

Gemäß einer Ausführungsform ist in dem Stall-Innenraum wenigstens ein Umluftventilator angeordnet, wobei der Umluftventilator dazu eingerichtet ist, die dem Stall-Innenraum zugeführte gefilterte Luft in dem Stall-Innenraum zu verteilen. Darüber hinaus kann ein solcher Umluftventilator auch in jenen Perioden zur Durchmischung der Luft in dem Stall-Innenraum verwendet werden, in denen für die in dem Geflügeltierstall gehaltenen Tiere kein Infektionsrisiko besteht und insoweit die Verschlusseinrichtung bzw. die Gardinen geöffnet sind und die Filtereinrichtung nicht betrieben wird.

Die Erfindung ist vorstehend unter Bezugnahme auf einen Geflügeltierstall beschrieben worden. In einem weiteren Aspekt betrifft die Erfindung ein Verfahren zum Halten von Geflügeltieren, insbesondere Puten. Die Erfindung löst die eingangs bezeichnete Aufgabe in Bezug auf das Verfahren, in dem dieses die Schritte aufweist: Bereitstellen eines Geflügeltierstalls, insbesondere eines Geflügeltierstall nach mindestens einem der vorstehenden Ansprüche, wobei ein Stall-Innenraum des Geflügeltierstalls an wenigstens einer Seite mittels wenigstens einer Öffnung zur Umgebung des Geflügeltierstalls hin offen ausgebildet ist, insbesondere wobei der Geflügeltierstall als Offenstall ausgebildet ist, Verschließen der Öffnung, insbesondere sämtliche Öffnungen, des Geflügeltierstalls mit einer Verschlusseinrichtung, insbesondere einer Gardine, Belüften des Stall-Innenraums mit gefilterter Luft.

Das Verfahren macht sich die gleichen Vorteile und bevorzugten Ausführungsformen zunutze wie der erfindungsgemäße Geflügeltierstall. Diesbezüglich wird auf die obigen Ausführungen verweisen und deren Inhalt hiermit einbezogen. Insbesondere wird durch das Verschließen der Öffnungen des Geflügeltierstalls und die anschließende Belüftung des Stall-Innenraums mit gefilterter Luft das Infektionsrisiko durch Wildtiere in den besonders infektionsanfälligen Monaten reduziert.

Die Erfindung wird dadurch weitergebildet, dass beim Belüften des Stall-Innenraums ein aktueller Druck im Inneren des Stall-Innenraums erzeugt wird, welcher insbesondere um 1 Pascal (Pa) bis 40 Pa höher ist als ein Luftdruck in der Umgebung des Geflügeltierstalls. Hierdurch wird erreicht, dass ausschließlich oder nahezu ausschließlich gefilterte Luft in den Stall-Innenraum gelangt und bauliche oder systembedingte Undichtigkeiten keinen signifikanten Einfluss auf das Infektionsrisiko der im Stall-Innenraum gehaltenen Geflügeltiere haben.

Gemäß einer Ausführungsform wird eine Temperatur der gefilterten Luft vor dem Zuführen in den Stall-Innenraum konditioniert, insbesondere auf eine Temperatur von 8 °C bis 35 °C. Der genannte Temperaturbereich hat sich als besonders geeignet zur Steigerung des Tierwohls erwiesen. Dabei wird die Temperatur vorzugsweise an die gehaltenen Tiere, deren Wachstumsstadium und die Jahreszeit angepasst. So kann die Temperatur der gefilterten Luft für kleinere Tiere, wie beispielsweise Broiler, 32 °C - 35 °C betragen, für schwere Hähne im Winter bis 12 °C und im Sommer auch etwa 22 °C.

Gemäß einer Ausführungsform erfolgt das Verschließen der wenigstens einen Öffnung, insbesondere aller Öffnungen, und das Belüften in Zeitperioden, in denen ein Vogelzug in der Umgebung des Geflügeltierstalls beobachtet wird. In diesen besonders für Aviäre Influenza anfälligen Monaten, in denen Wildtiere durch den Vogelzug die Umgebung der Geflügeltierställe passieren, erfolgt ein entsprechender Verschluss der Öffnungen des Offenstalles und eine Filterung der in den Stall-Innenraum abgegebenen Frischluft, wobei in Perioden, in denen kein oder nur ein sehr geringes Infektionsrisiko durch Wildtiere besteht, der Geflügeltierstall als klassischer Offenstall betrieben werden kann.

In einem weiteren Aspekt betrifft die Erfindung die Verwendung eines Geflügeltierstalls nach mindestens einem der vorstehenden Ansprüche zur Haltung von Geflügeltieren, insbesondere Puten.

Auch die Verwendung macht sich die gleichen Vorteile und bevorzugten Ausführungsformen zunutze wie der erfindungsgemäße Geflügeltierstall und das erfindungsgemäße Verfahren. Diesbezüglich wird auf die obigen Ausführungen verwiesen und deren Inhalt hiermit einbezogen.

Die Erfindung wird nachfolgend anhand bevorzugter Ausführungsbeispiele unter Bezugnahme auf die beigefügten Figuren näher beschrieben.

Hierbei zeigen:
- Fig. 1: eine schematische Darstellung eines ersten Ausführungsbeispiels eines erfindungsgemäßen Geflügeltierstalls in einer Draufsicht;
- Figuren 2 und 3: ein alternatives Ausführungsbeispiel eines erfindungsgemäßen Geflügeltierstalls in unterschiedlichen Ansichten.

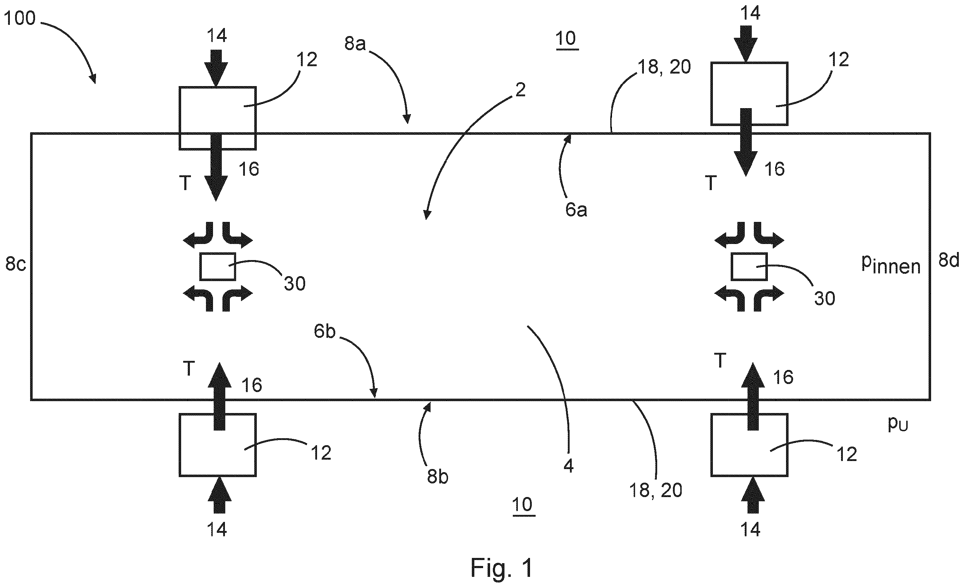

Figur 1 zeigt einen Geflügeltierstall 100, welcher insbesondere als Putenstall 100 ausgebildet ist. Der Geflügeltierstall 100 ist zur Haltung von Geflügeltieren eingerichtet. Der Geflügeltierstall 100 weist einen Stall-Innenraum 2 auf. Der Stall-Innenraum 2 weist einen Tier-Aufenthaltsbereich 4 auf. Der Stall-Innenraum 2 ist an zwei gegenüberliegenden Seiten 6a, 6b mittels jeweils einer in Fig. 1 schematisch dargestellten Öffnung 8a, 8b zur Umgebung 10 des Geflügeltierstalls 100 hin offen ausgebildet. Ein derartiger Geflügeltierstall 100 wird auch als Stall offener Bauweise oder als Offenstall bezeichnet. Der Geflügeltierstall 100 weist ferner insgesamt vier Filtereinrichtungen 12 auf. Jede der Filtereinrichtungen 12 ist dazu eingerichtet, Frischluft 14 aus einer Umgebung 10 des Geflügeltierstalls 100 anzusaugen, zu filtern, und als gefilterte Luft 16 an den Stall-Innenraum 2 abzugeben.

Der Geflügeltierstall 100 weist darüber hinaus insgesamt zwei Verschlusseinrichtungen 18 auf, welche dazu eingerichtet sind, die jeweils an den Seiten 6a, 6b des Stall-Innenraums 2 angeordneten Öffnungen 8a, 8b zu verschließen. An den übrigen Seiten 8c, 8d ist der Geflügeltierstall 100 geschlossen ausgebildet, d.h. es besteht dort keine Verbindung zwischen Stall-Innenraum 2 und Umgebung 10 des Geflügeltierstalls 100. Die Verschlusseinrichtungen 18 weisen jeweils eine Gardine 20 auf, welche dazu eingerichtet ist, die Öffnungen 8a, 8b zu verschließen oder freizugeben. Die Gardinen 20 können in eine geschlossene Position verbracht werden, in welcher die Öffnungen 8a, 8b verschlossen werden und in eine geöffnete Position, in der die Öffnungen 8a, 8b freigegeben werden. Wenn der Geflügeltierstall 100 als Offenstall betrieben werden soll, werden die Gardinen 20 in die geöffnete Position verbracht und die Filtereinrichtungen 12 deaktiviert. In Zeitperioden, in denen ein erhöhtes Infektionsrisiko durch Wildtiere, insbesondere Zugvögel, in der Umgebung des Geflügeltierstalls 10 besteht, werden die Gardinen 20 geschlossen, d. h. insbesondere nach unten gefahren, hierdurch werden die Öffnungen 8a, 8b verschlossen und sodann mittels der Filtereinrichtungen 12 gefilterte Luft 16 an den Stall-Innenraum 2 abgegeben.

Die Filtereinrichtungen 12 sind dazu eingerichtet, bei geschlossenen Gardinen 20 einen aktuellen Druck pᵢₙₙₑₙ in dem Stall-Innenraum 2 zu erzeugen. Dieser ist vorzugsweise größer ist als ein Umgebungsdruck pu, sodass ein Eindringen von Krankheitserregern von der Umgebung 10 des Geflügeltierstalls 100 in den Stall-Innenraum 2 vermieden wird. Durch das vorzugsweise permanente Ausströmen von Luft aus dem Stall-Innenraum 2 in Richtung der Umgebung 10 des Geflügeltierstalls 100 wird vermieden, dass mit Viren belastete Luft in den Stall-Innenraum 2 eindringen kann. Die Gardinen 20 sind aus einem im wesentlichen gasdichten Material ausgebildet und schirmen den Stall-Innenraum 2 gegenüber der Umgebung 10 des Geflügeltierstalls 100 ab. In dem Stall-Innenraum 2 sind ferner zwei Umluftventilatoren 30 angeordnet. Die Umluftventilatoren 30 sind dazu eingerichtet, die dem Stall-Innenraum 2 zugeführte gefilterte Luft 16 in dem Stall-Innenraum 2 zu verteilen und auch dann für eine Belüftung des Stall-Innenraumes 2 zu sorgen, wenn die Filtereinrichtungen 12 nicht betrieben werden.

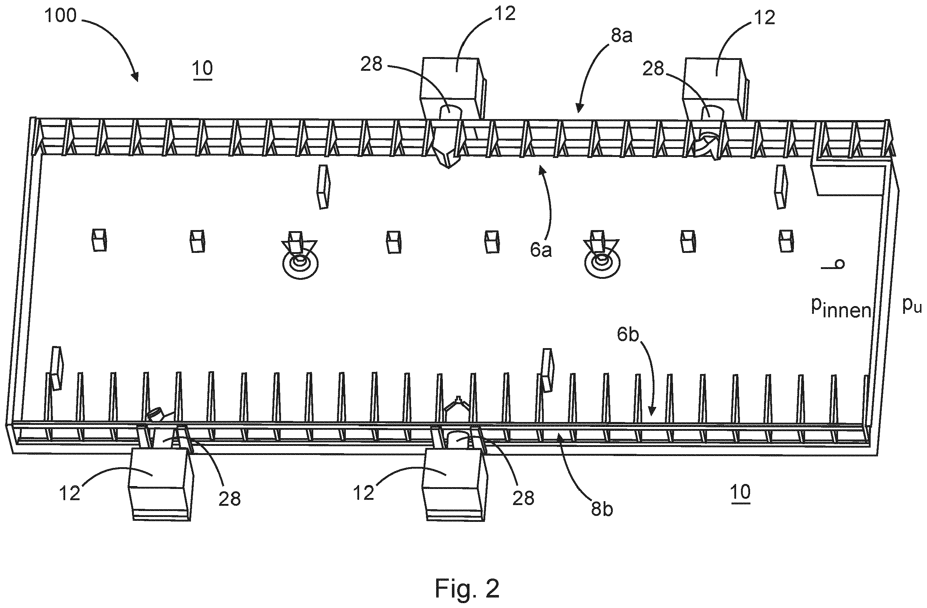

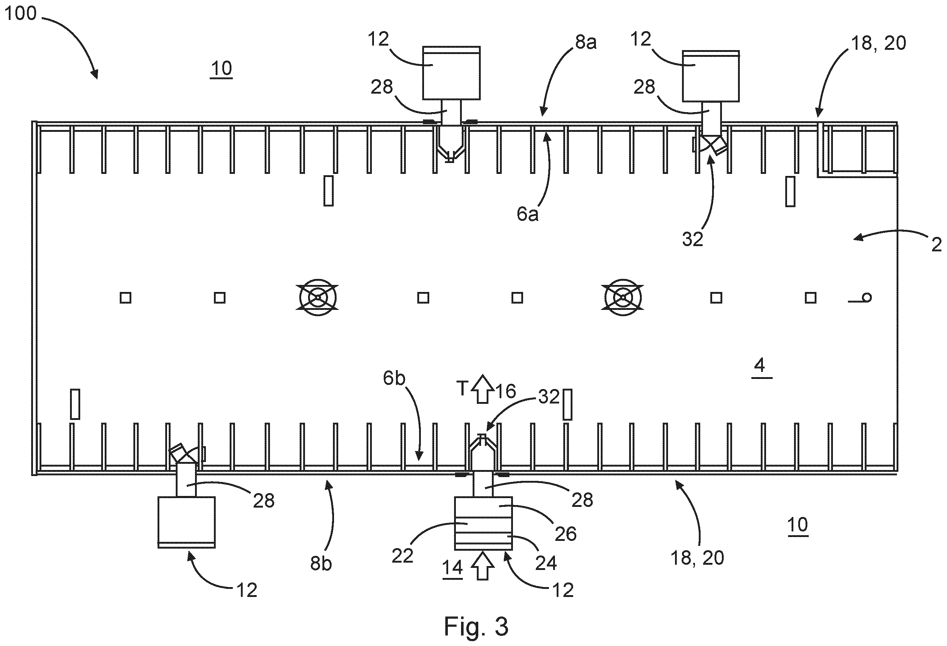

In dem in den Figuren 2 und 3 gezeigten Ausführungsbeispiel ist ebenfalls ein Geflügeltierstall 100 gezeigt, welcher als offener Putenstall 100 ausgebildet ist. Wie insbesondere Figur 2 zu entnehmen ist, ist der Stall-Innenraum 2 an gegenüberliegenden Längsseiten 6a, 6b mittels einer Vielzahl von Öffnungen 8a, 8 zur Umgebung 10 des Geflügeltierstalls 100 hin offen ausgebildet. Auch bei dem in den Figuren 2 und 3 gezeigten Ausführungsbeispiel sind insgesamt vier Filtereinrichtungen 12 vorgesehen, welche dazu eingerichtet sind, Frischluft 14 anzusaugen, zu filtern und an den Stall-Innenraum 2 abzugeben. Die ebenfalls an den Längsseiten 6a, 6b vorgesehenen Verschlusseinrichtungen 18 in Form von Gardinen 20 sind in Figur 3 lediglich schematisch angedeutet. Die Gardinen 20 sind ebenfalls dazu eingerichtet, die Öffnungen 8a, 8b des Stall-Innenraums 2 zur Umgebung 10 des Geflügeltierstalls 100 hin freizugeben oder zu verschließen. Die Länge der Gardinen 20 entspricht dabei wenigstens der Länge der Seiten 6a, 6b, sodass sämtliche Öffnungen 8a, 8b durch die Gardinen 20 verschlossen werden können. Auf diese Weise kann, wie beschrieben, in dem Stall-Innenraum 2 ein aktueller Druck pᵢₙₙₑₙ erzeugt werden, welcher gegenüber einem Umgebungsdruck pu vorzugsweise wenigstens geringfügig erhöht ist, sodass Luft aus dem Stall-Innenraum 2 ausströmt, nicht jedoch von außen in diesen einströmen kann.

In Figur 3 ist darüber hinaus schematisch der Aufbau einer Filtereinrichtung 12 gezeigt. Die Filtereinrichtung 12 weist ein Gebläse 22 sowie einen Filter 24, welcher insbesondere als mechanischer Filter 24 ausgebildet ist, auf. Der Filter 24 ist dazu eingerichtet, Partikel aus der angesaugten Frischluft 14 zu filtern. Der mechanische Filter 24 weist vorzugsweise Trägerpartikel auf, an denen entsprechende Krankheitserreger haften bleiben und auf diese Weise aus der angesaugten Frischluft 14 entfernt bzw. gefiltert werden. Wie ebenfalls in Figur 3 schematisch angedeutet ist, weist die Filtereinrichtung 12 eine Kühleinheit 26 auf. Die Kühleinheit 26 ist als adiabatische Kühleinheit 26 ausgebildet. Die Kühleinheit 26 ist dazu eingerichtet, eine Temperatur T der gefilterten Luft 16 zu konditionieren, d. h. insbesondere derart zu beeinflussen, dass eine Temperatur in dem Stall-Innenraum 2 in einem für die Geflügeltierhaltung besonders bevorzugten Bereich gehalten werden kann. Zwischen der Filtereinrichtung 12 und dem Stall-Innenraum 2 ist ein Rohrsystem 28 zur Zuführung der gefilterten Luft 16 zu dem Stall-Innenraum 2 vorgesehen. Benachbart zu dem Rohrsystem 28 und zwischen Stall-Innenraum 2 und Rohrsystem 28 befindet sich jeweils eine Düse 32. Mittels der Düse 32 kann eine Strömungsrichtung der dem Stall-Innenraum 2 zugeführten gefilterten Luft 16 wie gewünscht beeinflusst werden und auf diese Weise die Durchmischung der gefilterten Luft 16 in dem Stall-Innenraum 2 optimiert werden.

### Bezugszeichenliste

- 2: Stall-Innenraum
- 4: Tier-Aufenthaltsbereich
- 6a,b: Längsseiten des Stall-Innenraums
- 8a-d: Öffnung
- 10: Umgebung des Geflügeltierstalls
- 12: Filtereinrichtung
- 14: angesaugte Frischluft
- 16: gefilterte Luft
- 18: Verschlusseinrichtung
- 20: Gardine
- 22: Gebläse
- 24: mechanischer Filter
- 26: adiabatische Kühleinheit
- 28: Rohrsystem
- 30: Umluftventilator
- 32: Düse
- 100: Geflügeltierstall (Putenstall)
- pᵢₙₙₑₙ: aktueller Druck im Stall-Innenraum
- pu: Umgebungsdruck
- T: Temperatur der gefilterten Luft

## Patentansprüche

1. Geflügeltierstall (100), insbesondere Putenstall (100), zur Haltung von Geflügeltieren mit einem Stall-Innenraum (2), welcher einen Tier-Aufenthaltsbereich (4) aufweist,
wobei der Stall-Innenraum (2) an wenigstens einer Seite (6a, 6b) mittels wenigstens einer Öffnung (8a, 8b) zur Umgebung (10) des Geflügeltierstalls (100) hin offen ausgebildet ist, **gekennzeichnet durch** wenigstens eine Filtereinrichtung (12), welche dazu eingerichtet ist, Frischluft (14) anzusaugen, zu filtern und als gefilterte Luft (16) an den Stall-Innenraum (2) abzugeben,
und eine Verschlusseinrichtung (18), welche dazu eingerichtet ist, die wenigstens eine Öffnung (8a, 8b), insbesondere während des Betriebs der Filtereinrichtung (12), zu verschließen.

2. Geflügeltierstall (100) nach Anspruch 1,
wobei die Verschlusseinrichtung (18) wenigstens eine Gardine (20) aufweist, welche dazu eingerichtet ist, die wenigstens eine Öffnung (8a, 8b) zu verschließen oder freizugeben.

3. Geflügeltierstall (100) nach Anspruch 1 oder 2,
wobei die Filtereinrichtung (12) ein Gebläse (22) und einen Filter (24), insbesondere einen mechanischen Filter (24), aufweist, welcher dazu eingerichtet ist, Partikel aus der angesaugten Frischluft (14) zu filtern.

4. Geflügeltierstall (100) nach einem der vorstehenden Ansprüche,
wobei die Filtereinrichtung (12) eine Kühleinheit (26), insbesondere eine adiabatische Kühleinheit (26), aufweist, welche dazu eingerichtet ist, eine Temperatur (T) der gefilterten Luft (16) zu konditionieren.

5. Geflügeltierstall (100) nach einem der vorstehenden Ansprüche,
wobei zwischen der Filtereinrichtung (12) und dem Stall-Innenraum (2) ein Rohrsystem (28) zur Zuführung der gefilterten Luft (16) zu dem Stall-Innenraum (2) vorgesehen ist.

6. Geflügeltierstall (100) nach einem der vorstehenden Ansprüche,
wobei der Stall-Innenraum (2) an wenigstens zwei Seiten (6a, 6b) jeweils mittels wenigstens einer Öffnung (8a, 8b) zur Umgebung (10) des Geflügeltierstalls (100) hin offen ausgebildet ist, insbesondere an gegenüberliegenden Längsseiten (6a, 6b) des Stall-Innenraums (2), und wobei jeder Seite (6a, 6b) jeweils eine Verschlusseinrichtung (18), insbesondere eine Gardine (20), zum Verschließen der Öffnungen (8a, 8b) zugeordnet ist.

7. Geflügeltierstall (100) nach einem der vorstehenden Ansprüche,
wobei der Geflügeltierstall (100) als Offenstall ausgebildet ist.

8. Geflügeltierstall (100) nach einem der Ansprüche 2 bis 7,
wobei die Filtereinrichtung (12) dazu eingerichtet ist, bei geschlossener Gardine (20) oder bei geschlossenen Gardinen (20) einen aktuellen Druck (pᵢₙₙₑₙ) in dem Stall-Innenraum (2) zu erzeugen, welcher vorzugsweise einen Umgebungsdruck (pu) in einer Umgebung (10) des Geflügeltierstalls (100) übersteigt.

9. Geflügeltierstall (100) nach einem der Ansprüche 2 bis 8,
wobei die Gardine (20) aus einem im Wesentlichen gasdichten Material ausgebildet ist und den Stall-Innenraum (2) gegenüber der Umgebung (10) des Geflügeltierstalls (100) abschirmt.

10. Geflügeltierstall (100) nach einem der vorstehenden Ansprüche,
wobei in dem Stall-Innenraum (2) wenigstens ein Umluftventilator (30) angeordnet ist, wobei der Umluftventilator (30) dazu eingerichtet ist, die dem Stall-Innenraum (2) zugeführte gefilterte Luft (16) in dem Stall-Innenraum (2) zu verteilen.

11. Verfahren zum Halten von Geflügeltieren, insbesondere Puten, mit den Schritten:
- Bereitstellen eines Geflügeltierstalls (100), insbesondere eines Geflügeltierstalls (100) nach mindestens einem der vorstehenden Ansprüche, wobei ein Stall-Innenraum (2) des Geflügeltierstalls (100) an wenigstens einer Seite (6a, 6b) mittels wenigstens einer Öffnung (8a, 8b) zur Umgebung (10) des Geflügeltierstalls (100) hin offen ausgebildet ist, insbesondere wobei der Geflügeltierstall (100) als Offenstall ausgebildet ist,
- Verschließen der Öffnung (8a, 8b), insbesondere sämtlicher Öffnungen (8a, 8b), des Geflügeltierstalls (100) mit einer Verschlusseinrichtung (18), insbesondere einer Gardine (20),
- Belüften des Stall-Innenraums (2) mit gefilterter Luft (16).

12. Verfahren nach Anspruch 11,
wobei beim Belüften des Stall-Innenraums (2) ein aktueller Druck (pᵢₙₙₑₙ) im Inneren des Stall-Innenraums (2) erzeugt wird, welcher insbesondere um 1 Pa bis 40 Pa höher ist als ein Luftdruck (pu) in der Umgebung (10) des Geflügeltierstalls (100).

13. Verfahren nach Anspruch 11 oder 12,
wobei eine Temperatur (T) der gefilterten Luft (16) vor dem Zuführen in den Stall-Innenraum (2) konditioniert wird, insbesondere auf eine Temperatur (T) von 8 °C bis 35 °C.

14. Verfahren nach einem der Ansprüche 11 bis 13,
wobei das Verschließen der wenigstens einen Öffnung (8a, 8b) und das Belüften in Zeitperioden erfolgt, in denen ein Vogelzug in der Umgebung (10) des Geflügeltierstalls (100) beobachtet wird.

15. Verwendung eines Geflügeltierstalls (100) nach mindestens einem der vorstehenden Ansprüche zur Haltung von Geflügeltieren, insbesondere Puten.
